# EUROPEAN PATENT APPLICATION

(11) **EP 4 593 486 A1**
(43) Date of publication of application: **30.07.2025**
(21) Application number: 22958992.4
(22) Date of filing: 19.09.2022
(51) Int. Cl.: H04W 72/04, H04L 5/14

(54) **SUB-BAND CONFIGURATION METHOD AND DEVICE**

(71) Applicant: Beijing Xiaomi Mobile Software Co., Ltd., Beijing 100085 (CN)
(72) Inventor: WANG, Lei, Beijing 100085 (CN)
(74) Representative: Zimmermann, Tankred Klaus
(86) International application number: PCT/CN2022/119706
(87) International publication number: WO 2024/059979

(57) **Abstract**

The present disclosure provides a sub-band configuration method and device. The sub-band configuration method comprises: sending sub-band configuration information, wherein the sub-band configuration information is used for configuring, for a terminal, a frequency domain resource range occupied by a first sub-band, the first sub-band is located in a specified time unit in the time domain, and the transmission direction of the information in the first sub-band is different from the transmission direction of the information in the specified time unit. According to the present disclosure, the frequency domain resource range occupied by the first sub-band can be configured for the terminal, the first sub-band is located in the specified time unit in the time domain, and the transmission direction of the information in the first sub-band is different from the transmission direction of the information in the specified time unit, so that the communication time delay is reduced and the feasibility and reliability of full-duplex communications are improved.

## Description

### FIELD

The present disclosure relates to the field of communications, and in particular relates to a method and a device for configuring a subband.

### BACKGROUND

A release-18 (rel-18) full duplex (duplex) enhancement project will study a full duplex solution, and in particular, a network side may simultaneously receive and send data in a slot. Accordingly, a terminal side may send and receive data in any slot.

However, in the current protocol, the terminal may only perform downlink reception in a slot in which a transmission direction is downlink, and may only perform uplink transmission in a slot in which the transmission direction is uplink. Accordingly, the base station may only perform downlink transmission in the slot in which the transmission direction is downlink, and may only perform uplink reception in the slot in which the transmission direction is uplink, which limits the development of full duplex communication.

### SUMMARY

In order to solve the problems in the related art, embodiments of the present disclosure provide a method and a device for configuring a subband.

According to a first aspect of embodiments of the present disclosure, there is provided a method for configuring a subband, performed by a base station, including:
sending subband configuration information, in which the subband configuration information is configured to configure a frequency domain resource range occupied by a first subband for a terminal, the first subband is located in a specified time unit in a time domain, and a transmission direction of information in the first subband is different from a transmission direction of information in the specified time unit.

According to a second aspect of embodiments of the present disclosure, there is provided a method for configuring a subband, performed by a terminal, including:
receiving subband configuration information sent by a base station, in which the subband configuration information is configured to configure a frequency domain resource range occupied by a first subband for the terminal, the first subband is located in a specified time unit in a time domain, and a transmission direction of information in the first subband is different from a transmission direction of information in the specified time unit; and
determining the frequency domain resource range occupied by the first subband based on the subband configuration information.

According to a third aspect of embodiments of the present disclosure, there is provided a device for configuring a subband, applied to a base station, including:
a sending module configured to send subband configuration information, in which the subband configuration information is configured to configure a frequency domain resource range occupied by a first subband for a terminal, the first subband is located in a specified time unit in a time domain, and a transmission direction of information in the first subband is different from a transmission direction of information in the specified time unit.

According to a fourth aspect of embodiments of the present disclosure, there is provided a device for configuring a subband, applied to a terminal, including:
a receiving module configured to receive subband configuration information sent by a base station, in which the subband configuration information is configured to configure a frequency domain resource range occupied by a first subband for the terminal, the first subband is located in a specified time unit in a time domain, and a transmission direction of information in the first subband is different from a transmission direction of information in the specified time unit; and
a determining module configured to determine the frequency domain resource range occupied by the first subband based on the subband configuration information.

According to a fifth aspect of embodiments of the present disclosure, there is provided a device for configuring a subband, including:
a processor; and
a memory storing instructions executable by the processor;
in which the processor is configured to perform any one of the methods for configuring the subband described above on a base station side.

According to a sixth aspect of embodiments of the present disclosure, there is provided a device for configuring a subband, including:
a processor; and
a memory storing instructions executable by the processor;
in which the processor is configured to perform any one of the methods for configuring the subband described above on a terminal side.

The technical solutions provided by embodiments of the present disclosure may include the following advantageous effects.

In embodiments of the present disclosure, the base station may send the subband configuration information configured to configure the frequency domain resource range occupied by the first subband for the terminal, in which the first subband is located in the specified time unit in the time domain, and the transmission direction of the first subband is different from the transmission direction of the specified time unit. In the present disclosure, the frequency domain resource range occupied by the first subband may be configured for the terminal, the first subband is located in the specified time unit in the time domain, and the transmission direction of information in the first subband is different from the transmission direction of information in the specified time unit, thereby reducing communication delay and improving the feasibility and reliability of full-duplex communication.

It is to be understood that both the foregoing general description and the following detailed description are illustrative and explanatory only and are not restrictive of embodiments of the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic flowchart illustrating a method for configuring a subband according to an illustrative embodiment.
FIG. 2 is a schematic flowchart illustrating another method for configuring a subband according to an illustrative embodiment.
FIG. 3 is a schematic flowchart illustrating another method for configuring a subband according to an illustrative embodiment.
FIG. 4 is a schematic flowchart illustrating another method for configuring a subband according to an illustrative embodiment.
FIG. 5 is a schematic flowchart illustrating another method for configuring a subband according to an illustrative embodiment.
FIG. 6 is a schematic flowchart illustrating another method for configuring a subband according to an illustrative embodiment.
FIG. 7 is a block diagram illustrating a device for configuring a subband according to an illustrative embodiment.
FIG. 8 is a block diagram illustrating another device for configuring a subband according to an illustrative embodiment.
FIG. 9 is a schematic structural diagram illustrating a device for configuring a subband according to an illustrative embodiment of the present disclosure.
FIG. 10 is a schematic structural diagram illustrating another device for configuring a subband according to an illustrative embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise indicated. The implementations set forth in the following description of illustrative embodiments do not represent all implementations consistent with the present disclosure. Instead, they are merely examples of devices and methods consistent with aspects related to the present disclosure as recited in the appended claims.

Terms used herein in the present disclosure are only for the purpose of describing specific embodiments, but should not be construed to limit the present disclosure. As used in the present disclosure and the appended claims, "a/an", "said" and "the" in singular forms are intended to include plural forms, unless clearly indicated in the context otherwise. It should also be understood that the term "and/or" used herein represents and contains any or all possible combinations of one or more associated listed items.

It should be understood that, although terms such as "first," "second" and "third" may be used in the present disclosure for describing various information, these information should not be limited by these terms. These terms are only used for distinguishing information of the same type from each other. For example, first information may also be referred to as second information, and similarly, the second information may also be referred to as the first information, without departing from the scope of the present disclosure. As used herein, the term "if" may be construed to mean "when" or "upon" or "in response to determining" depending on the context.

In the following, a method for configuring a subband provided by the present disclosure will first be described from a base station side.

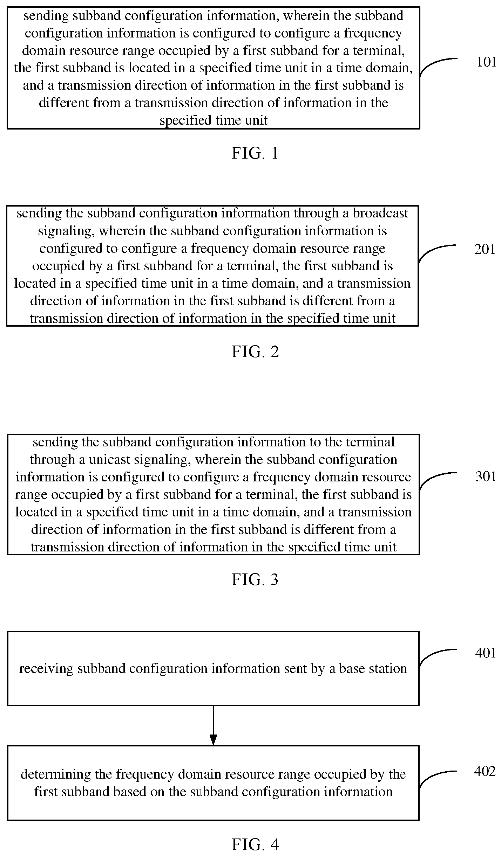

Embodiments of the present disclosure provide a method for configuring a subband. Referring to FIG. 1, FIG. 1 is a schematic flowchart illustrating a method for configuring a subband according to an illustrative embodiment. The method is performed by a base station, and includes the following steps.

In step 101, subband configuration information is sent, in which the subband configuration information is configured to configure a frequency domain resource range occupied by a first subband for a terminal, the first subband is located in a specified time unit in a time domain, and a transmission direction of information in the first subband is different from a transmission direction of information in the specified time unit.

In embodiments of the present disclosure, the information includes but is not limited to signaling, data, and the like.

In embodiments of the present disclosure, the specified time unit may be a seamless bidirectional forwarding detection (SBFD) time unit. Here, the SBFD time unit is a time unit on which information transmission in different transmission directions may be performed.

For example, the SBFD time unit is configured as an uplink time unit by the base station, the terminal may perform downlink reception on the SBFD time unit, and the base station may perform downlink transmission on the SBFD time unit.

For example, the SBFD time unit may be a downlink time unit including an uplink subband, or a flexible time unit including an uplink subband, or an uplink time unit including a downlink subband, or a flexible time unit including a downlink subband, which is not limited in the present disclosure.

The specified time unit may be in units of slot, symbol, span, etc., which is not limited in the present disclosure. A span includes multiple consecutive symbols.

The base station may configure the frequency domain resource range occupied by the first subband in a carrier for the terminal through an explicit signaling, in which the first subband is located in the specified time unit in the time domain, i.e., located in the SBFD time unit, and the transmission direction of information in the first subband is different from the transmission direction of information in the specified time unit. Generally, the base station configures one carrier for the terminal for one cell. The transmission direction includes: uplink, downlink or flexible.

In a possible implementation, the first subband may be the downlink subband located in the uplink time unit.

In another possible implementation, the first subband may be the uplink subband located in the downlink time unit.

In the above embodiments, the base station may configure the frequency domain resource range occupied by the first subband for the terminal, in which the first subband is located in the specified time unit in the time domain, and the transmission direction of information in the first subband is different from the transmission direction of information in the specified time unit, thereby reducing communication delay and improving the feasibility and reliability of full-duplex communication.

In some optional embodiments, referring to FIG. 2, FIG. 2 is a schematic flowchart illustrating a method for configuring a subband according to an illustrative embodiment. The method is performed by a base station, and includes the following steps.

In step 201, subband configuration information is sent through a broadcast signaling, in which the subband configuration information is configured to configure a frequency domain resource range occupied by a first subband for a terminal, the first subband is located in a specified time unit in a time domain, and a transmission direction of information in the first subband is different from a transmission direction of information in the specified time unit.

In a possible implementation, the broadcast signaling may be a system information block 1 (SIB1).

In another possible implementation, the broadcast signaling may be other system information (OSI).

In embodiments of the present disclosure, the information includes but is not limited to signaling, data, and the like.

In embodiments of the present disclosure, the specified time unit may be an SBFD time unit. The SBFD time unit may be a downlink time unit including an uplink subband, or a flexible time unit including an uplink subband, or an uplink time unit including a downlink subband, or a flexible time unit including a downlink subband.

The specified time unit may be in units of slot, symbol, span, etc., which is not limited in the present disclosure. A span includes multiple consecutive symbols.

The base station may configure the frequency domain resource range occupied by the first subband in a carrier for the terminal through an explicit signaling. Specifically, the explicit signaling may be the broadcast signaling. The first subband is located in the specified time unit in the time domain, and the transmission direction of information in the first subband is different from the transmission direction of information in the specified time unit. Generally, the base station configures one carrier for the terminal for one cell. The transmission direction includes: uplink, downlink or flexible.

In a possible implementation, the first subband may be the downlink subband located in the uplink time unit.

In another possible implementation, the first subband may be the uplink subband located in the downlink time unit.

In a possible implementation, the frequency domain resource range occupied by the first subband configured by the base station for the terminal is within a frequency domain resource range occupied by an initial bandwidth part (BWP).

The initial BWP refers to a BWP allocated by the base station for a terminal in an idle state and configured to receive system information and complete operations such as random access.

In the above embodiments, the base station may configure the frequency domain resource range occupied by the first subband for the terminal through the broadcast signaling, in which the first subband is located in the specified time unit in the time domain, and the transmission direction of information in the first subband is different from the transmission direction of information in the specified time unit, thereby reducing communication delay and improving the feasibility and reliability of full-duplex communication.

In some optional embodiments, referring to FIG. 3, FIG. 3 is a schematic flowchart illustrating a method for configuring a subband according to an illustrative embodiment. The method is performed by a base station, and includes the following steps.

In step 301, subband configuration information is sent to a terminal through a unicast signaling, in which the subband configuration information is configured to configure a frequency domain resource range occupied by a first subband for the terminal, the first subband is located in a specified time unit in a time domain, and a transmission direction of information in the first subband is different from a transmission direction of information in the specified time unit.

In embodiments of the present disclosure, the information includes but is not limited to signaling, data, and the like.

In embodiments of the present disclosure, the unicast signaling may be a user equipment (UE) dedicated radio resource control (RRC) signaling.

In embodiments of the present disclosure, the specified time unit may be an SBFD time unit. The SBFD time unit may be a downlink time unit including an uplink subband, or a flexible time unit including an uplink subband, or an uplink time unit including a downlink subband, or a flexible time unit including a downlink subband.

The specified time unit may be in units of slot, symbol, span, etc., which is not limited in the present disclosure. A span includes multiple consecutive symbols.

The base station may configure the frequency domain resource range occupied by the first subband in a carrier for the terminal through an explicit signaling. Specifically, the explicit signaling may be the unicast signaling, such as the UE dedicated RRC signaling. The first subband is located in the specified time unit in the time domain, and the transmission direction of information in the first subband is different from the transmission direction of information in the specified time unit. Generally, the base station configures one carrier for the terminal for one cell. The transmission direction includes: uplink, downlink or flexible.

In a possible implementation, the first subband may be the downlink subband located in the uplink time unit.

In another possible implementation, the first subband may be the uplink subband located in the downlink time unit.

In embodiments of the present disclosure, a relationship between the frequency domain resource range occupied by the first subband and a frequency domain resource range occupied by an active BWP is not limited. In the related art, a frequency domain resource allocated by the base station for the terminal may include multiple available BWPs, but only one BWP is available at one time, i.e., being in an active state. A BWP in the active state is the active BWP. The active BWP may be an active uplink BWP or an active downlink BWP, which is not limited in the present disclosure.

Specifically, in a possible implementation, the frequency domain resource range occupied by the first subband configured by the base station for the terminal is within the frequency domain resource range occupied by the active BWP. The active BWP may be the active uplink BWP or the active downlink BWP, which is not limited in the present disclosure.

That is, the frequency domain resource range occupied by the first subband configured by the base station for the terminal may be within the frequency domain resource range occupied by the active uplink BWP.

Alternatively, the frequency domain resource range occupied by the first subband configured by the base station for the terminal may be within the frequency domain resource range occupied by the active uplink BWP.

In another possible implementation, the frequency domain resource range occupied by the first subband configured by the base station for the terminal may partially overlap with the frequency domain resource range occupied by the active BWP. The active BWP may be the active uplink BWP or the active downlink BWP, which is not limited in the present disclosure.

That is, the frequency domain resource range occupied by the first subband configured by the base station for the terminal may partially overlap with the frequency domain resource range occupied by the active uplink BWP.

Alternatively, the frequency domain resource range occupied by the first subband configured by the base station for the terminal may partially overlap with the frequency domain resource range occupied by the active downlink BWP.

In another possible implementation, the frequency domain resource range occupied by the first subband configured by the base station for the terminal does not overlap at all with the frequency domain resource range occupied by the active BWP. The active BWP may be the active uplink BWP or the active downlink BWP, which is not limited in the present disclosure.

That is, the frequency domain resource range occupied by the first subband configured by the base station for the terminal does not overlap at all with the frequency domain resource range occupied by the active uplink BWP.

Alternatively, the frequency domain resource range occupied by the first subband configured by the base station for the terminal does not overlap at all with the frequency domain resource range occupied by the active downlink BWP.

In the above embodiments, the base station may configure the frequency domain resource range occupied by the first subband for the terminal through the unicast signaling, in which the first subband is located in the specified time unit in the time domain, and the transmission direction of information in the first subband is different from the transmission direction of information in the specified time unit, thereby reducing communication delay and improving the feasibility and reliability of full-duplex communication.

In the following, a method for configuring a subband provided by the present disclosure will be described from a terminal side.

Embodiments of the present disclosure provide a method for configuring a subband. Referring to FIG. 4, FIG. 4 is a schematic flowchart illustrating a method for configuring a subband according to an illustrative embodiment. The method is performed by a terminal, and includes the following steps.

In step 401, subband configuration information sent by a base station is received.

In embodiments of the present disclosure, the subband configuration information is configured to configure a frequency domain resource range occupied by a first subband for the terminal, the first subband is located in a specified time unit in a time domain, and a transmission direction of information in the first subband is different from a transmission direction of information in the specified time unit.

In embodiments of the present disclosure, the specified time unit may be an SBFD time unit. The SBFD time unit may be a downlink time unit including an uplink subband, or a flexible time unit including an uplink subband, or an uplink time unit including a downlink subband, or a flexible time unit including a downlink subband.

The specified time unit may be in units of slot, symbol, span, etc., which is not limited in the present disclosure. A span includes multiple consecutive symbols.

The base station may configure the frequency domain resource range occupied by the first subband in a carrier for the terminal through an explicit signaling, in which the first subband is located in the specified time unit in the time domain, and the transmission direction of information in the first subband is different from the transmission direction of information in the specified time unit. Generally, the base station configures one carrier for the terminal for one cell. The transmission direction includes: uplink, downlink or flexible. The information includes but is not limited to signaling, data, and the like.

In a possible implementation, the first subband may be the downlink subband located in the uplink time unit.

In another possible implementation, the first subband may be the uplink subband located in the downlink time unit.

In step 402, the frequency domain resource range occupied by the first subband is determined based on the subband configuration information.

In embodiments of the present disclosure, the terminal may determine the frequency domain resource range occupied by the first subband based on the subband configuration information sent by the base station, thereby receiving or sending information on the first subband.

For example, in a case where the specified time unit is an uplink slot, the first subband is located in the uplink slot in the time domain, and the first subband is the downlink subband, the terminal may determine the frequency domain resource range occupied by the downlink subband in the uplink slot based on the subband configuration information sent by the base station, and perform downlink reception on a frequency domain resource of the downlink subband.

For another example, in a case where the specified time unit is a downlink slot and the first subband is the uplink subband, the terminal may determine the frequency domain resource range occupied by the uplink subband in the downlink slot based on the subband configuration information sent by the base station, and perform uplink transmission on a frequency domain resource of the uplink subband.

In the above embodiments, the terminal may determine the frequency domain resource range occupied by the first subband based on the subband configuration information sent by the base station, in which the first subband is located in the specified time unit in the time domain, and the transmission direction of information in the first subband is different from the transmission direction of information in the specified time unit, thereby reducing communication delay and improving the feasibility and reliability of full-duplex communication.

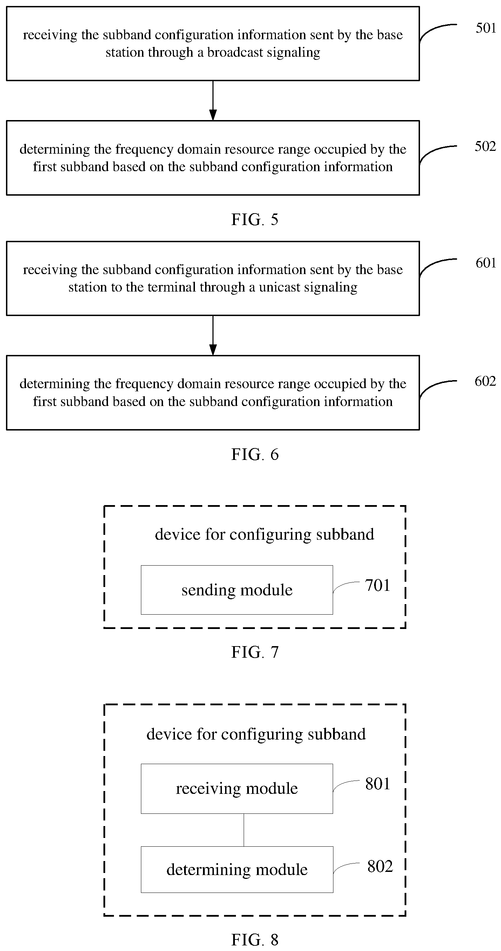

In some optional embodiments, referring to FIG. 5, FIG. 5 is a schematic flowchart illustrating a method for configuring a subband according to an illustrative embodiment. The method is performed by a terminal, and includes the following steps.

In step 501, subband configuration information sent by a base station through a broadcast signaling is received.

In a possible implementation, the broadcast signaling may be an SIB 1.

In another possible implementation, the broadcast signaling may be OSI.

In embodiments of the present disclosure, the specified time unit may be an SBFD time unit. The SBFD time unit may be a downlink time unit including an uplink subband, or a flexible time unit including an uplink subband, or an uplink time unit including a downlink subband, or a flexible time unit including a downlink subband.

The specified time unit may be in units of slot, symbol, span, etc., which is not limited in the present disclosure. A span includes multiple consecutive symbols.

The terminal may receive the frequency domain resource range occupied by the first subband in a carrier in the specified time unit configured by the base station for the terminal through an explicit signaling, i.e. the broadcast signaling described above, in which the first subband is located in the specified time unit in the time domain, and the transmission direction of information in the first subband is different from the transmission direction of information in the specified time unit. Generally, the base station configures one carrier for the terminal for one cell. The transmission direction includes: uplink, downlink or flexible. In embodiments of the present disclosure, the information includes but is not limited to signaling, data, and the like.

In a possible implementation, the first subband may be the downlink subband located in the uplink time unit.

In another possible implementation, the first subband may be the uplink subband located in the downlink time unit.

In a possible implementation, the frequency domain resource range occupied by the first subband configured by the base station for the terminal is within a frequency domain resource range occupied by an initial BWP.

The initial BWP refers to a BWP allocated by the base station for a terminal in an idle state and configured to receive system information and complete operations such as random access.

In step 502, the frequency domain resource range occupied by the first subband is determined based on the subband configuration information.

In embodiments of the present disclosure, the terminal may determine the frequency domain resource range occupied by the first subband based on the subband configuration information sent by the base station, thereby receiving or sending information on the first subband.

In the above embodiments, the terminal may receive the subband configuration information sent by the base station through the broadcast signaling, and may determine the frequency domain resource range occupied by the first subband based on the subband configuration information, in which the first subband is located in the specified time unit in the time domain, and the transmission direction of information in the first subband is different from the transmission direction of information in the specified time unit, thereby reducing communication delay and improving the feasibility and reliability of full-duplex communication.

In some optional embodiments, referring to FIG. 6, FIG. 6 is a schematic flowchart illustrating a method for configuring a subband according to an illustrative embodiment. The method is performed by a terminal, and includes the following steps.

In step 601, subband configuration information sent by a base station through a unicast signaling is received.

In embodiments of the present disclosure, the unicast signaling is a user equipment (UE) dedicated RRC signaling.

In embodiments of the present disclosure, the specified time unit may be an SBFD time unit. The SBFD time unit may be a downlink time unit including an uplink subband, or a flexible time unit including an uplink subband, or an uplink time unit including a downlink subband, or a flexible time unit including a downlink subband.

The specified time unit may be in units of slot, symbol, span, etc., which is not limited in the present disclosure. A span includes multiple consecutive symbols. The base station may configure the frequency domain resource range occupied by the first subband in a carrier for the terminal through an explicit signaling, i.e. the unicast signaling described above, in which the first subband is located in the specified time unit in the time domain, and the transmission direction of information in the first subband is different from the transmission direction of information in the specified time unit. Generally, the base station configures one carrier for the terminal for one cell. The transmission direction includes: uplink, downlink or flexible. In embodiments of the present disclosure, the information includes but is not limited to signaling, data, and the like.

In a possible implementation, the first subband may be the downlink subband located in the uplink time unit.

In another possible implementation, the first subband may be the uplink subband located in the downlink time unit.

In embodiments of the present disclosure, a relationship between the frequency domain resource range occupied by the first subband and a frequency domain resource range occupied by an active BWP is not limited. Specifically, the active BWP may be an active uplink BWP or an active downlink BWP, which is not limited in the present disclosure.

In a possible implementation, the frequency domain resource range occupied by the first subband configured by the base station for the terminal is within the frequency domain resource range occupied by the active BWP. The active BWP may be the active uplink BWP or the active downlink BWP, which is not limited in the present disclosure.

That is, the frequency domain resource range occupied by the first subband configured by the base station for the terminal may be within the frequency domain resource range occupied by the active uplink BWP.

Alternatively, the frequency domain resource range occupied by the first subband configured by the base station for the terminal may be within the frequency domain resource range occupied by the active uplink BWP.

In another possible implementation, the frequency domain resource range occupied by the first subband configured by the base station for the terminal may partially overlap with the frequency domain resource range occupied by the active BWP. The active BWP may be the active uplink BWP or the active downlink BWP, which is not limited in the present disclosure.

That is, the frequency domain resource range occupied by the first subband configured by the base station for the terminal may partially overlap with the frequency domain resource range occupied by the active uplink BWP.

Alternatively, the frequency domain resource range occupied by the first subband configured by the base station for the terminal may partially overlap with the frequency domain resource range occupied by the active downlink BWP.

In another possible implementation, the frequency domain resource range occupied by the first subband configured by the base station for the terminal does not overlap at all with the frequency domain resource range occupied by the active BWP. The active BWP may be the active uplink BWP or the active downlink BWP, which is not limited in the present disclosure.

That is, the frequency domain resource range occupied by the first subband configured by the base station for the terminal does not overlap at all with the frequency domain resource range occupied by the active uplink BWP.

Alternatively, the frequency domain resource range occupied by the first subband configured by the base station for the terminal does not overlap at all with the frequency domain resource range occupied by the active downlink BWP.

In step 602, the frequency domain resource range occupied by the first subband is determined based on the subband configuration information.

In embodiments of the present disclosure, the terminal may determine the frequency domain resource range occupied by the first subband based on the subband configuration information sent by the base station, thereby receiving or sending information on the first subband.

In the above embodiments, the terminal may receive the subband configuration information sent by the base station through the unicast signaling, and may determine the frequency domain resource range occupied by the first subband based on the subband configuration information, in which the first subband is located in the specified time unit in the time domain, and the transmission direction of information in the first subband is different from the transmission direction of information in the specified time unit, thereby reducing communication delay and improving the feasibility and reliability of full-duplex communication.

The method for configuring the subband provided in the present disclosure is further illustrated below with examples.

In Embodiment 1, it is assumed that the terminal is a Rel-18 and later version terminal, and has a half-duplex capability or a full-duplex capability, which is not limited in the present disclosure. Regarding the base station, it may simultaneously send and receive data in the specified time unit, e.g. an SBFD slot. Regarding the terminal, downlink data may be received in the SBFD slot, or uplink data may be sent in the SBFD slot. The SBFD slot is a downlink (DL) slot including an uplink subband (UL subband), or a flexible slot including a UL subband, or an uplink (UL) slot including a downlink (DL) subband, or a flexible slot including a DL subband.

In the present embodiment, the base station may carry the subband configuration information through a broadcast signaling to configure the frequency domain resource range occupied by the first subband in the carrier for the terminal. In the present embodiment, it is assumed that the first subband is the UL subband within the downlink slot. The broadcast signaling is an SIB1 or OSI, which is not limited in the present embodiment.

The frequency domain resource range occupied by the first subband indicated by the subband configuration information carried through the broadcast signaling may be within a frequency domain resource range occupied by an initial BWP. Taking the first subband as the uplink subband in the downlink slot as an example, the frequency domain resource range occupied by it may be any one of:
being within a frequency domain resource range occupied by an initial UL BWP; or
being within a frequency domain resource range occupied by an initial DL BWP.

The terminal determines the frequency domain resource range occupied by the first subband in the SBFD slot based on the subband configuration information configured by the base station through the SIB1. It should be noted that the first subband is not necessarily within the frequency domain resource occupied by an active DL BWP or an active UL BWP.

In Embodiment 2, it is assumed that the terminal is a Rel-18 and later version terminal, and has a half-duplex capability or a full-duplex capability, which is not limited in the present disclosure. Regarding the base station, it may simultaneously send and receive data in the SBFD slot. Regarding the terminal, the downlink data may be received in the SBFD slot, or the uplink data may be sent in the SBFD slot. The SBFD slot is the DL slot including the UL subband, or the flexible slot including the UL subband, or the UL slot including the DL subband, or the flexible slot including the DL subband.

In the present embodiment, the base station may carry the subband configuration information through the unicast signaling, e.g., the UE dedicated RRC signaling, to indicate to the terminal the frequency domain resource range occupied by the first subband in the carrier. In the present embodiment, it is assumed that the first subband is the UL subband within the DL slot. Of course, the first subband may further be the DL subband within the UL slot, which is not limited in the present embodiment.

The frequency domain resource range occupied by the first subband indicated by the subband configuration information carried through the UE specific RRC signaling is not limited in the present disclosure. Taking the first subband as the uplink subband in the downlink slot as an example, the frequency domain resource range occupied by it may be any one of:
being within the frequency domain resource range occupied by the active UL BWP;
being within the frequency domain resource range occupied by the active UL BWP;
not overlapping with the frequency domain resource range occupied by the active UL BWP;
not overlapping with the frequency domain resource range occupied by the active DL BWP;
partially overlapping with the frequency domain resource range occupied by the active UL BWP; and
partially overlapping with the frequency domain resource range occupied by the active DL BWP.

The terminal determines the frequency domain resource range occupied by the first subband in the SBFD slot based on the subband configuration information configured by the UE specific RRC signaling.

Corresponding to aforementioned embodiments of the application function implementing method, the present disclosure further provides embodiments of an application function implementing device.

Referring to FIG. 7, FIG. 7 is a block diagram illustrating a device for configuring a subband according to an illustrative embodiment. The device is applied to a base station, and includes:
a sending module 701 configured to send subband configuration information, in which the subband configuration information is configured to configure a frequency domain resource range occupied by a first subband for a terminal, the first subband is located in a specified time unit in a time domain, and a transmission direction of information in the first subband is different from a transmission direction of information in the specified time unit.

Referring to FIG. 8, FIG. 8 is a block diagram illustrating a device for configuring a subband according to an illustrative embodiment. The device is applied to a terminal, and includes:
a receiving module 801 configured to receive subband configuration information sent by a base station, in which the subband configuration information is configured to configure a frequency domain resource range occupied by a first subband for the terminal, the first subband is located in a specified time unit in a time domain, and a transmission direction of information in the first subband is different from a transmission direction of information in the specified time unit; and
a determining module 802 configured to determine the frequency domain resource range occupied by the first subband based on the subband configuration information.

Since the device embodiments substantially correspond to the method embodiments, reference is made to the partial description of the method embodiments. The above-described device embodiments are merely for the purpose of illustration, in which the units described as separate components may be or may not be physically separated, and the components displayed as units may be or may not be physical units, that is, either located at one place or distributed onto a plurality of network units. The object of embodiments of the present disclosure may be achieved by some or all of the modules in accordance with practical requirements. It would be appreciated and executable by those skilled in the art without creative efforts.

Accordingly, the present disclosure further provides a device for configuring a subband, including:
a processor; and
a memory storing instructions executable by the processor;
in which the processor is configured to perform any one of the methods for configuring the subband described above on a base station side.

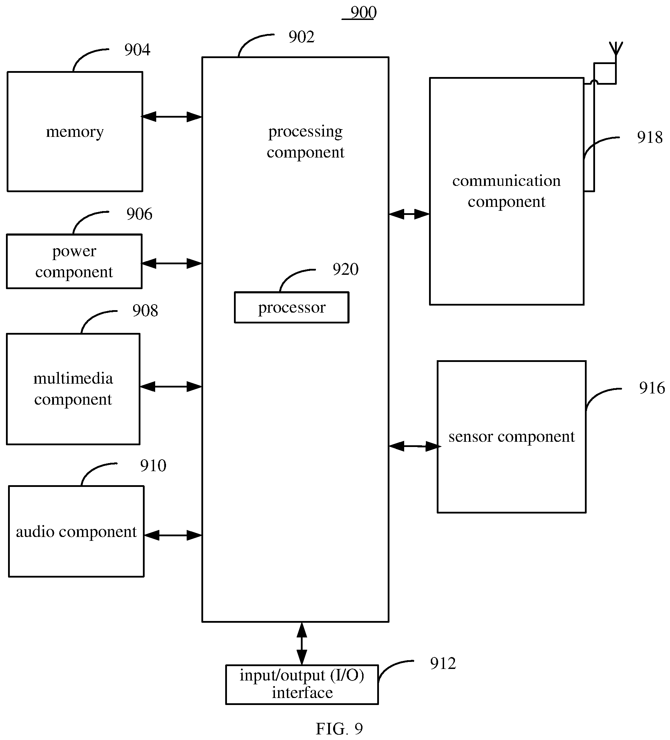

As shown in FIG. 9, FIG. 9 is a schematic structural diagram illustrating a device 900 for configuring a subband according to an illustrative embodiment. The device 900 may be provided as a base station. Referring to FIG. 9, the device 900 includes a processing component 922, a wireless transmission/reception component 924, an antenna component 926, and a signal processing part specific to a wireless interface. The processing component 922 may further include at least one processor.

One of the processors in the processing component 922 may be configured to perform any one of the methods for configuring the subband described above.

Accordingly, the present disclosure further provides a device for configuring a subband, including:
a processor; and
a memory storing instructions executable by the processor;
in which the processor is configured to perform any one of the methods for configuring the subband described above on a terminal side.

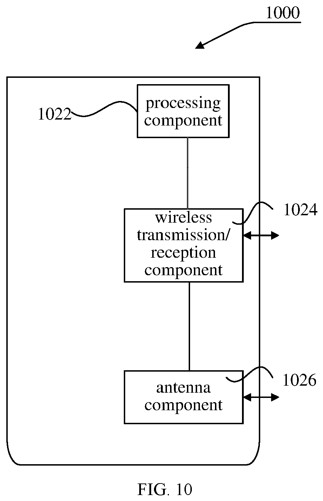

FIG. 10 is a block diagram illustrating a device 1000 for configuring a subband according to an illustrative embodiment. For example, the device 1000 may be a terminal such as a mobile phone, a tablet computer, an e-book reader, a multimedia playing device, a wearable device, a vehicle-mounted user device, an ipad, a smart television, or the like.

Referring to FIG. 10, the device 1000 may include one or more of the following components: a processing component 1002, a memory 1004, a power component 1006, a multimedia component 1008, an audio component 1010, an input/output (I/O) interface 1012, a sensor component 1016, and a communication component 1018.

The processing component 1002 typically controls overall operations of the device 1000, such as the operations associated with display, telephone calls, random access of data, camera operations, and recording operations. The processing component 1002 may include one or more processors 1020 to execute instructions to complete all or some of the steps in the method for configuring the subband described above. Moreover, the processing component 1002 may include one or more modules which facilitate the interaction between the processing component 1002 and other components. For example, the processing component 1002 may include a multimedia module to facilitate the interaction between the multimedia component 1008 and the processing component 1002. For another example, the processing component 1002 may read executable instructions from the memory to implement the steps of the method for configuring the subband provided in the above embodiments.

The memory 1004 is configured to store various types of data to support the operation of the device 1000. Examples of such data include instructions for any applications or methods operated on the device 1000, contact data, phonebook data, messages, pictures, video, etc. The memory 1004 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with generation, management, and distribution of power in the device 1000.

The multimedia component 1008 includes a screen providing an output interface between the device 1000 and the user. In some embodiments, the multimedia component 1008 includes a front camera and/or a rear camera. The front camera and/or the rear camera may receive an external multimedia datum while the device 1000 is in an operation mode, such as a photographing mode or a video mode. Each of the front camera and the rear camera may be a fixed optical lens system or have focus and optical zoom capability.

The audio component 1010 is configured to output and/or input audio signals. For example, the audio component 1010 includes a microphone ("MIC") configured to receive an external audio signal when the device 1000 is in an operation mode, such as a call mode, a recording mode, and a voice recognition mode. The received audio signal may be further stored in the memory 1004 or transmitted via the communication component 1018. In some embodiments, the audio component 1010 further includes a speaker to output audio signals.

The I/O interface 1012 provides an interface between the processing component 1002 and peripheral interface modules, such as a keyboard, a click wheel, a button and the like. The button may include, but is not limited to, a home button, a volume button, a starting button, and a locking button.

The sensor component 1016 includes one or more sensors to provide status assessments of various aspects of the device 1000. For example, the sensor component 1016 may detect an on/off status of the device 1000, relative positioning of components, e.g., the display and the keypad, of the device 1000, a change in position of the device 1000 or a component of the device 1000, a presence or absence of user contact with the device 1000, an orientation or an acceleration/deceleration of the device 1000, and a change in temperature of the device 1000. The sensor component 1016 may include a proximity sensor configured to detect the presence of nearby objects without any physical contact. The sensor component 1016 may also include a light sensor, such as a CMOS or CCD image sensor, for use in imaging applications. In some embodiments, the sensor component 1016 may further include an accelerometer sensor, a gyroscope sensor, a magnetic sensor, a pressure sensor, or a temperature sensor.

The communication component 1018 is configured to facilitate communication, wired or wireless, between the device 1000 and other devices. The device 1000 may access a wireless network based on a communication standard, such as Wi-Fi, 2G, 3G, 4G, 5G, or 6G, or a combination thereof. In one illustrative embodiment, the communication component 1018 receives a broadcast signal or broadcast associated information from an external broadcast management system via a broadcast channel. In one illustrative embodiment, the communication component 1018 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing any one of the methods for configuring the subband described above on a terminal side.

In illustrative embodiments, there is further provided a non-transitory computer-readable storage medium (such as the memory 1004) including instructions that, when executed by the processor 1020 of the device 1000, to complete the method for configuring the subband described above. For example, the non-transitory computer-readable storage medium may be a ROM, a RAM, a CD-ROM, a magnetic tape, a floppy disc, an optical data storage device, and the like.

Other embodiments of the present disclosure will be apparent to those skilled in the art from consideration of the specification and practice of the present disclosure disclosed here. The present disclosure is intended to cover any variations, uses, or adaptations of the present disclosure following the general principles thereof and including common knowledge or conventional technical means known in the art but not disclosed in the present disclosure. The specification and examples should be considered as illustrative only, with a true scope and spirit of the present disclosure being indicated by the appended claims.

It will be appreciated that the present disclosure is not limited to the exact construction that has been described above and illustrated in the accompanying drawings, and that various modifications and changes can be made without departing from the scope thereof. The scope of the present disclosure is only limited by the appended claims.

## Claims

1. A method for configuring a subband, performed by a base station, comprising:
sending subband configuration information, wherein the subband configuration information is configured to configure a frequency domain resource range occupied by a first subband for a terminal, the first subband is located in a specified time unit in a time domain, and a transmission direction of information in the first subband is different from a transmission direction of information in the specified time unit.

2. The method according to claim 1, wherein sending the subband configuration information comprises:
sending the subband configuration information through a broadcast signaling.

3. The method according to claim 2, wherein the broadcast signaling is a system information block 1 (SIB1); or
the broadcast signaling is other system information (OSI).

4. The method according to claim 2 or 3, wherein the frequency domain resource range occupied by the first subband is within a frequency domain resource range occupied by an initial bandwidth part (BWP).

5. The method according to claim 1, wherein sending the subband configuration information comprises:
sending the subband configuration information to the terminal through a unicast signaling.

6. The method according to claim 5, wherein the unicast signaling is a user equipment (UE) dedicated radio resource control (RRC) signaling.

7. The method according to claim 5 or 6, wherein the frequency domain resource range occupied by the first subband is within a frequency domain resource range occupied by an active BWP; or
the frequency domain resource range occupied by the first subband partially overlaps with a frequency domain resource range occupied by an active BWP; or
the frequency domain resource range occupied by the first subband does not overlap with a frequency domain resource range occupied by an active BWP.

8. The method according to claim 7, wherein the active BWP is an active uplink BWP or an active downlink BWP.

9. The method according to claim 1, wherein the first subband is a downlink subband located in an uplink time unit; or
the first subband is an uplink subband located in a downlink time unit.

10. A method for configuring a subband, performed by a terminal, comprising:
receiving subband configuration information sent by a base station, wherein the subband configuration information is configured to configure a frequency domain resource range occupied by a first subband for the terminal, the first subband is located in a specified time unit in a time domain, and a transmission direction of information in the first subband is different from a transmission direction of information in the specified time unit; and
determining the frequency domain resource range occupied by the first subband based on the subband configuration information.

11. The method according to claim 10, wherein receiving the subband configuration information sent by the base station comprises:
receiving the subband configuration information sent by the base station through a broadcast signaling.

12. The method according to claim 11, wherein the broadcast signaling is a system information block 1 (SIB1); or
the broadcast signaling is other system information (OSI).

13. The method according to claim 11 or 12, wherein the frequency domain resource range occupied by the first subband is within a frequency domain resource range occupied by an initial bandwidth part (BWP).

14. The method according to claim 10, wherein receiving the subband configuration information sent by the base station comprises:
receiving the subband configuration information sent by the base station to the terminal through a unicast signaling.

15. The method according to claim 14, wherein the unicast signaling is a user equipment (UE) dedicated radio resource control (RRC) signaling.

16. The method according to claim 14 or 15, wherein the frequency domain resource range occupied by the first subband is within a frequency domain resource range occupied by an active BWP; or
the frequency domain resource range occupied by the first subband partially overlaps with a frequency domain resource range occupied by an active BWP; or
the frequency domain resource range occupied by the first subband does not overlap with a frequency domain resource range occupied by an active BWP.

17. The method according to claim 16, wherein the active BWP is an active uplink BWP or an active downlink BWP.

18. The method according to claim 10, wherein the first subband is a downlink subband located in an uplink time unit; or
the first subband is an uplink subband located in a downlink time unit.

19. A device for configuring a subband, applied to a base station, comprising:
a sending module configured to send subband configuration information, wherein the subband configuration information is configured to configure a frequency domain resource range occupied by a first subband for a terminal, the first subband is located in a specified time unit in a time domain, and a transmission direction of information in the first subband is different from a transmission direction of information in the specified time unit.

20. A device for configuring a subband, applied to a terminal, comprising:
a receiving module configured to receive subband configuration information sent by a base station, wherein the subband configuration information is configured to configure a frequency domain resource range occupied by a first subband for the terminal, the first subband is located in a specified time unit in a time domain, and a transmission direction of information in the first subband is different from a transmission direction of information in the specified time unit; and
a determining module configured to determine the frequency domain resource range occupied by the first subband based on the subband configuration information.

21. A device for configuring a subband, comprising:
a processor; and
a memory storing instructions executable by the processor;
wherein the processor is configured to perform the method for configuring the subband according to any one of claims 1 to 9.

22. A device for configuring a subband, comprising:
a processor; and
a memory storing instructions executable by the processor;
wherein the processor is configured to perform the method for configuring the subband according to any one of claims 10 to 18.
